(19) **Europäisches Patentamt / European Patent Office / Office européen des brevets**

(11) **EP 1 997 656 B1**

(12) **EUROPÄISCHE PATENTSCHRIFT**

(45) Veröffentlichungstag und Bekanntmachung des Hinweises auf die Patenterteilung:
**29.02.2012 Patentblatt 2012/09**

(51) Int Cl.:
***B60H 1/00*** *(2006.01)*

(21) Anmeldenummer: **08008743.0**

(22) Anmeldetag: **09.05.2008**

(54) **Fluidkanal**

Fluid conduit

Canal de fluide

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **31.05.2007 DE 102007025572**

(43) Veröffentlichungstag der Anmeldung:
**03.12.2008 Patentblatt 2008/49**

(73) Patentinhaber: **Behr GmbH & Co. KG**
**70469 Stuttgart (DE)**

(72) Erfinder:
• **Augustin, Kai**
**70771 Leinfelden (DE)**

• **Spät, Moritz**
**73525 Schwäbisch Gmünd (DE)**
• **Lindauer, Sascha**
**73553 Alfdorf (DE)**
• **Venezia, Vincenzo**
**71093 Weil im Schönbuch (DE)**

(74) Vertreter: **Grauel, Andreas**
**Grauel IP**
**Patentanwaltskanzlei**
**Presselstrasse 10**
**70191 Stuttgart (DE)**

(56) Entgegenhaltungen:
**BE-A1- 817 276      DE-A1- 19 722 866**
**DE-C- 529 545       FR-A- 2 229 012**
**US-A- 6 139 423**

EP 1 997 656 B1

**Beschreibung**

Die Erfindung betrifft einen Fluidkanal, insbesondere einen Luftkanal, der Teil eines Fahrzeug-Belüftungssystems und über den Luft von einer Klimaanlage einem Fahrzeuginnenraum zuführbar ist, gemäß dem Oberbegriff des Anspruches 1.

Klimaanlagen für Kraftfahrzeuge weisen üblicherweise ein mehrteiliges, spritzgegossenes Gehäuse auf, das mit ebenfalls spritzgegossenen oder im Kunststoffblasverfahren hergestellten Luftkanälen verbunden ist, über welche die temperierte und konditionierte Luft dem Fahrzeuginnenraum zuführbar ist. Zur Vermeidung einer zu starken Geräuschentwicklung, die durch die durchströmende Luft oder von außerhalb des Gehäuses liegenden Schallquellen hervorgerufen und insbesondere an großwandigen Gehäuseteilen verstärkt wird, werden diese großflächigen Bereiche solcher Gehäuse mit einer Schaumstoffauflage versehen. Diese Schaumstoffauflage lässt sich in der Regel auf das Gehäuse nur nachträglich, d. h. nach Fertigstellung des Gehäuses, aufbringen, was jedoch aufwändig ist.

Aus der DE 36 39 138 C2 ist ein Gehäuse für eine Heizungs- oder Klimaanlage eines Kraftfahrzeugs bekannt, das mit Schaumstoff versehende Wandbereiche aufweist, welche aus einem schaumstoffummantelten Stützgerippe bestehen, wobei die Schaumstoffschicht nachträglich am Gehäuse anspritzbar ist.

Ferner ist aus der DE 197 22 866 A1 ein Luftführungskanal einer Heizungs- oder Klimaanlage eines Kraftfahrzeugs bekannt, mit einer einem Gebläse zugeordneten Eingangsöffnung und einem weitere Komponenten der Heizungs- oder Klimaanlage enthaltenden Gehäuse zugeordneten Ausgangsöffnung, der mindestens eine Krümmung aufweist, so dass maximal nur zwischen einem kleinen Teilbereich der Eingangsöffnung und einem kleinen Teilbereich der Ausgangsöffnung eine lineare Verbindung möglich ist. Die Kanalwandung kann zumindest innenseitig mit schalldämpfendem Material ausgekleidet sein. Die DE 197 22 866 A1 zeigt einen Fluidkanal gemäß Oberbegriff des Anspruchs 1.

Derartige Ausgestaltungen lassen noch Wünsche offen.

Es ist Aufgabe der Erfindung, einen Fluidkanal zu verbessern.

Diese Aufgabe wird gelöst durch einen Fluidkanal mit den Merkmalen des Anspruchs 1. Vorteilhafte Ausgestaltungen sind Gegenstand der Unteransprüche.

Hierbei ist ein Fluidkanal vorgesehen, mit einer Wand, wobei der Fluidkanal einen gekrümmten Verlauf aufweist, so dass nur zwischen einem Teilbereich der Eingangsöffnung und einem kleinen Teilbereich der Ausgangsöffnung eine lineare Verbindung möglich ist. Erfindungsgemäß ist im Fluidkanal mindestens ein Strömungsleitelement vorgesehen, welches den Fluidkanal in zwei Teilfluidkanäle unterteilt und zumindest mit einem Teilbereich in dem Bereich des Fluidkanals angeordnet ist, in welchem eine lineare Verbindung zwischen der Eingangsöffnung und der Ausgangsöffnung möglich ist. Ferner ist eine Verblockung in Wellenform vorgesehen. Das Strömungsleitelement in Verbindung mit der Ausgestaltung des Fluidkanals, d.h. dessen Wandverlaufs, kann eine direkte Durchschallung des Fluidkanals auf relativ einfache Weise verhindern.

Das Strömungsleitelement weist einen profilierten Querschnitt mit mindestens einer gekrümmt in Strömungsrichtung verlaufenden Fläche auf. Insbesondere bevorzugt ist der Querschnitt stromlinienförmig profiliert.

Der Fluidkanal ist derart ausgebildet, dass er eine Verblockung in Wellenform aufweist. Hierbei sind gemäß einer bevorzugten Ausgestaltung, der Eintrittsquerschnitt vor der Verblockung und der Austrittsquerschnitt nach der Verblockung miteinander fluchtend angeordnet.

Bevorzugt ist die Wand des Fluidkanals zumindest bereichsweise mit schallabsorbierendem Material umgeben oder aus schallabsorbierendem Material gebildet und/oder zumindest bereichsweise durch ein schalltransparentes Material gebildet.

Durch die Verwendung eines Strömungsleitelements kann zudem das Geschwindigkeitsprofil trotz einer Umlenkung, insbesondere bevorzugt einer wellenartigen Umlenkung, homogenisiert werden, so dass das Strömungsleitelement neben der Schalldämpfungsfunktion eine Funktion zur Vergleichmäßigung des Strömungsprofils- aufweist. Hierbei wird der Fluidkanal durch das Strömungsleitelement in zwei Teilfluidkanäle unterteilt, welche gemäß einer besonders bevorzugten Ausgestaltung jeweils einen Düsenbereich und einen Diffusorbereich aufweisen. Durch die geeignete Ausgestaltung der Düsen- und Diffusorbereiche kann durch besagte Homogenisierung der Geschwindigkeitsverteilung am Austrittsquerschnitt auch die (maximale) Strömungsgeschwindigkeit verringert werden, wodurch sich der Gesamtdruckverlust der Klimaanlage verringert.

Bevorzugt ist das Strömungsleitelement durch schallabsorbierendes Material gebildet oder zumindest teilweise von schallabsorbierendem Material umgeben. Eine entsprechende Ausgestaltung unterstützt das Verhindern einer direkten Durchschallung des Fluidkanals.

Vorzugsweise ist in zumindest einem Bereich, welcher durch schallabsorbierendes Material gebildet ist, eine Dämmwand angeordnet. Die Dämmwand kann im Strömungsleitelement ausgebildet sein, wobei sie auch tragende Funktionen für das schallabsorbierende Material übernehmen kann.

Beim Fluidkanal handelt es sich vorzugsweise um einen Luftkanal, insbesondere einen Luftkanal über welchen die Mitteldüse eines Fahrzeuginnenraums Luft in denselben zugeführt wird. Entsprechende Ausgestaltungen sind jedoch auch für beliebige andere Fluidkanäle möglich, also bspw. für einen Luftkanal zum Fondbereich oder zu den Seitendüsen. Die "Welle" im Fluidkanal erhöht zwar leicht den erforderlichen Bauraum, verbessert aber die aerodynamische Funktion des Fluidkanals und verhindert oder verringert die Weiterleitung von Geräuschen, wie beispielsweise Strömungs- oder Klappengeräusche aus dem Inneren des Klimaanlagengehäuses.

Eine besonders bevorzugte Anwendungsform eines derartigen Luftkanals ist die Verwendung als Schalldämpfer, jedoch sind auch andere Anwendungen möglich.

Im Folgenden wird die Erfindung anhand mehrerer Ausführungsbeispiele unter Bezugnahme auf die Zeichnung im Einzelnen erläutert. Es zeigen:

Fig. 1　　einen Längsschnitt durch einen Luftkanal gemäß einem ersten Beispiel,

Fig. 2　　einen Längsschnitt durch einen Luftkanal gemäß einem zweiten Beispiel,

Fig. 3　　einen Längsschnitt durch einen Luftkanal gemäß dem Ausführungsbeispiel der Erfindung mit durch Pfeile angedeutetem Strömungsprofil am Luftein- und -austritt, und

Fig. 4　　eine Fig. 3 entsprechende Darstellung zur Verdeutlichung der Abmessungen, auf welche Bezug genommen wird.

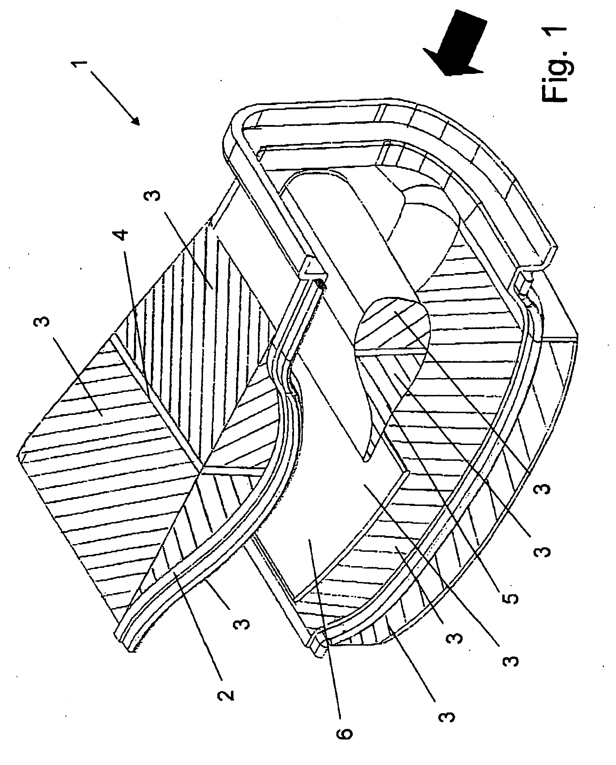

Fig. 1 zeigt einen Längsschnitt durch einen Fluidkanal, vorliegend einen Luftkanal 1, der mit einem Klimaanlagengehäuse (nicht dargestellt) verbunden ist, und über den temperierte Luft dem Fahrzeuginnenraum zuführbar ist. Der Pfeil zeigt hierbei die Strömungsrichtung der Luft an. Der Luftkanal 1 wird vorliegend durch eine Wand 2 gebildet, welche aus einem Kunststoffmaterial spritzgegossen ist.

Der Luftkanal 1 weist im dargestellten Bereich eine leichte Richtungs- und Querschnittsveränderung auf, wobei im in Fig. 1 oben dargestellten Bereich die Wand 2 wellenartig ausgebildet ist (vorliegend ist ein Wellental vorgesehen) und von außen mit Elementen aus schallabsorbierenden Material 3, vorliegend einem akustischen Schaum, versehen ist. Zwei benachbarte Elemente sind vorliegend durch eine Dämmwand 4 getrennt. Die Elemente sind vorliegend derart geformt, dass die Welle der Wand 2 aufgefüllt ist, so dass sich unter Einbeziehung der Dämmwand 4 eine Art Ebene ergibt.

In dem in Fig. 1 unten dargestellten Bereich, in welchem die Wand 2 nach außen gekrümmt ist, ist dagegen ein Element aus schallabsorbierendem Material 3 angebracht, welches eine im Wesentlichen konstante Dicke aufweist.

Auch auf der Innenseite der Wände 2 sind dünn ausgebildete Elemente aus schallabsorbierendem Material 3 aufgebracht, wobei die Elemente vorliegend aus dem gleichen Material gefertigt sind.

Im. Innenraum des Luftkanals 1 sind ferner zwei unterschiedliche Strömungsleitelemente 5 und 6 angeordnet, wobei das erste Strömungsleitelement 5 einen stromlinienförmig profilierten Querschnitt und das zweite Strömungsleitelement 6 einen leicht entsprechend dem Luftkanalverlauf gekrümmten Verlauf mit konstanter Dicke auf. Das erste Strömungsleitelement 5 weist eine Dämmwand 7, welche als tragende Struktur dient, auf, welche eine konstante Dicke hat und in ihrer Erstreckung im Wesentlichen senkrecht zur Wand 2 des Luftkanals 1 angeordnet ist. An dieser Dämmwand 7 sind zwei profilierte Elemente aus schallabsorbierendem Material 3 angebracht, so dass sich insgesamt die besagte stromlinienförmige Gestalt des ersten Strömungsleitelements 5 ergibt.

Das erste Strömungsleitelement 5 ist vorliegend etwas nach oben versetzt im Luftkanal 1 angeordnet. Das zweite Strömungsleitelement 6 ist etwas nach unten versetzt im Luftkanal 1 angeordnet, wobei es - in Luftströmungsrichtung gesehen - kurz nach dem Ende des ersten Strömungsleitelements 5 anfängt. Das zweite Strömungsleitelement 6 ist vorliegend vollständig von einer dünnen Schicht aus schallabsorbierendem Material 3 umgeben. Insgesamt ergeben sich so ein Ein- und ein Austrittsquerschnitt, die auf Grund der Einbauten (erstes und zweites Strömungsleitelement) nicht auf direktem Wege mit einer linearen Verbindung miteinander verbindbar sind.

Insgesamt erfolgt die Anordnung der Elemente aus schallabsorbierendem Material 3 derart, dass keine direkte Durchschallung des Luftkanals 1 möglich ist, d.h. die Elemente sind nicht nur um den Luftkanal 1 herum sondern insbesondere auch im Weg der Schallausbreitung, d.h. der linearen Verbindung zwischen Eintrittsquerschnitt und Austrittsquerschnitt angeordnet (z.B. in Gestalt der Strömungsleitelemente 5, 6 und der Welle). Auf Grund ihrer Funktion wird auf den nach unten in den Strömungsweg ragenden Bereich auch als Verblockung Bezug genommen.

Das im Folgenden beschriebene, zweite Beispiel unterscheidet sich vom ersten Beispiel nur in der Ausgestaltung der Wand 2 des Luftkanals 1, so dass für gleiche oder gleichwirkende Elemente im Folgenden dieselben Bezugszeichen verwendet werden.

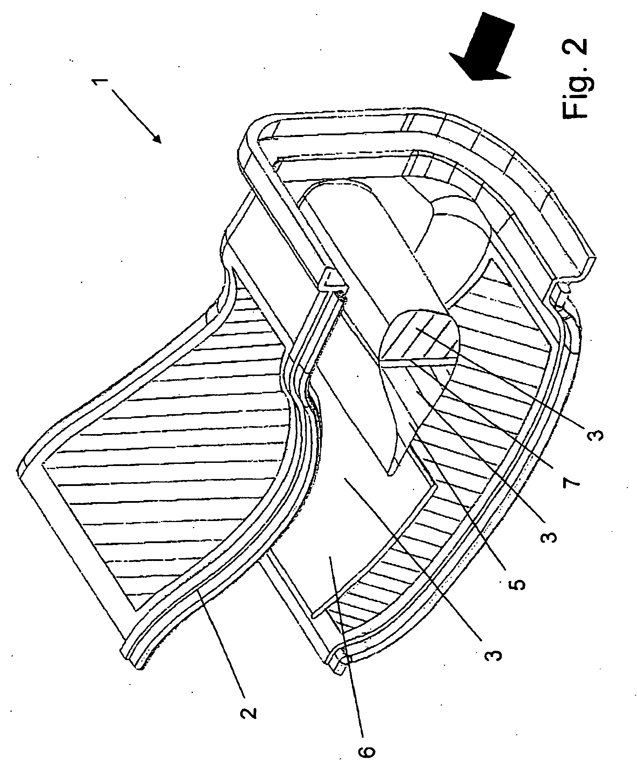

Die Wand 2 des Luftkanals 1 wird vorliegend in den in Fig. 2 schraffiert dargestellten Bereichen, also in den Bereichen auf der Krümmungsinnen- und - außenseite des Luftkanals 1, die gemäß dem ersten Ausführungsbeispiel von innen und außen her mit schallabsorbierendem Material 3 bedeckt sind, durch ein schalltransparentes Material 13 gebildet. Gemäß dem zweiten Beispiel entfällt ferner die Dämmwand 4, welche gemäß dem ersten Ausführungsbeispiel auf der Außenseite des Luftkanals 1 ausgebildet und zwischen zwei Elementen aus schallabsorbierendem Material angeordnet ist.

Zweck des zweiten Strömungsleitelements 6 bei in beiden vorstehend beschriebenen Beispielen eine vollständige Verblockung des Strömungsquerschnitts, welche vorliegend nicht ausschließlich durch das erste Strömungsleitelement 5 möglich ist.

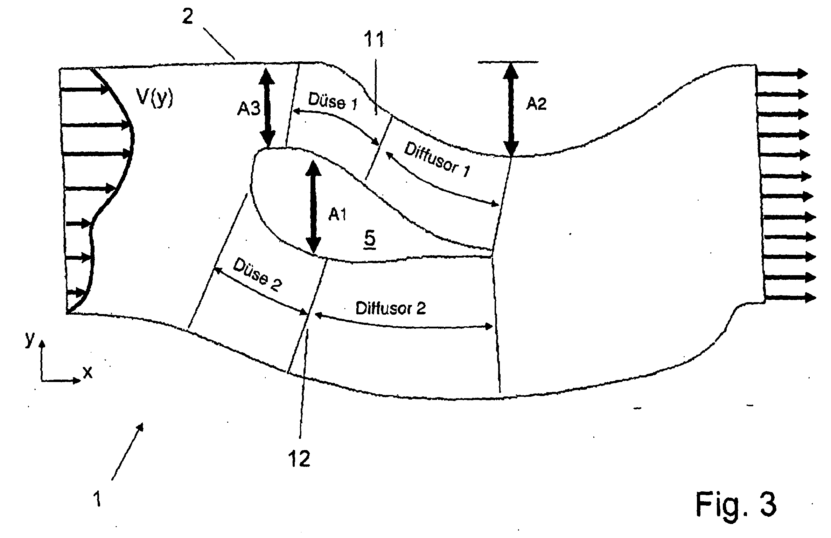

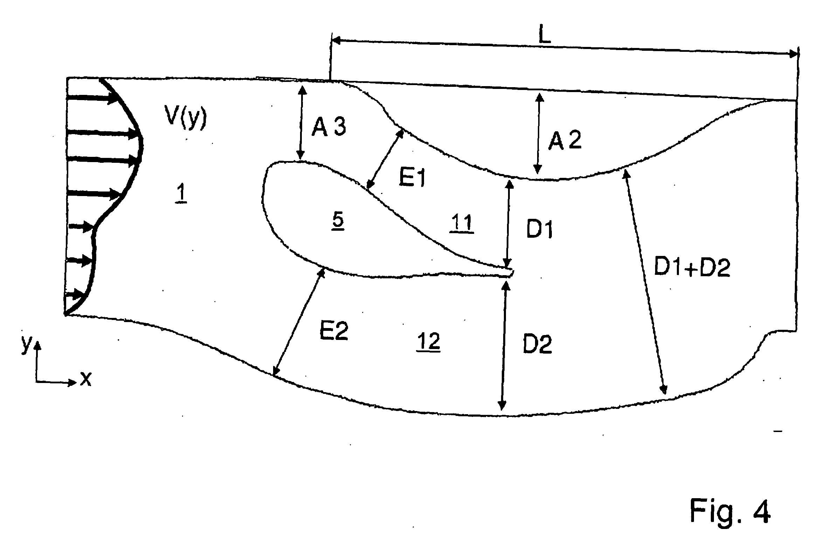

Gemäß dem , in Fig. 3 und 4 dargestellten Ausführungsbeispiel der Erfindung ist lediglich ein einziges Strömungsleitelement im Luftkanal 1. angeordnet, welches in seiner Gestalt und seinem Aufbau, auch wenn nicht explizit dargestellt, im Wesentlichen dem ersten Strömungsleitelement 5 der vorigen Beispiele entspricht, weshalb dieses Strömungsleitelement ebenfalls mit dem Bezugszeichen 5 versehen ist.

Auch der Luftkanal 1 gemäß dem Ausführungsbeispiel weist eine wellenartige Umlenkung auf. Die Umlenkung weist eine Länge L auf, wobei die maximale Tiefe der Verblockung A2 vorliegend auch dem Abstand des Strömungsleitelements 5 von der entsprechenden Wand 2 entspricht (siehe Fig. 4). Die genaue Position des Strömungsleitelements 5 und die maximale Tiefe der Verblockung A2 ergibt sich aus den Eintrittsrandbedingungen, d.h. aus V(y). Im vorliegenden Fall ist die Eintrittsgeschwindigkeit in y-Richtung im oben dargestellten Bereich höher als im unten dargestellten Bereich.

Die Höhe des Strömungsleitelements. 5 ist auch mit A1 bezeichnet. Die Eintrittshöhe in den auf der Seite der Verblockung angeordneten, ersten Teilluftkanal 11 ist in der Zeichnung mit A3 bezeichnet. Durch das Strömungsleitelement 5 ergibt sich in beiden anströmseitigen Teilluftkanälen 11 bzw. 12 eine Düsenfunktion (in Fig. 3 bezeichnet mit Düse 1 bzw. Düse 2) und in den ausströmseitigen Teilluftkanälen eine Diffusorfunktion (in Fig. 3 bezeichnet mit Diffusor 1 bzw. Diffusor 2), wobei der engste Querschnitt der Düse 1 mit E1, der engste Querschnitt der Düse 2 mit E2, der Austritt aus dem Diffusor 1 mit D1 und der Austritt aus dem Diffusor 2 mit D2 bezeichnet sind. Der Querschnitt in Strömungsrichtung nach dem Strömungsleitelement 5 bleibt im Wesentlichen konstant, wie in Fig. 4 mit D1+D2 angedeutet. Ferner sei darauf hingewiesen, dass der engste Querschnitt der Düse jeweils dem Eintritt in den entsprechenden Diffusor entspricht.

Folgende Verhältnisse haben sich als vorteilhaft herausgestellt:

$$A2 / L = 0{,}10 \text{ bis } 2{,}$$

Insbesondere für den Schalldämpfer gemäß dem vorliegenden Ausführungsbeispiel sind Verhältnisse für A2/L von 0,15 bis 0,35, und ganz besonders bevorzugt 0,15 bis 0,3 geeignet.

Die Tiefe der Verblockung A2 ist abhängig von der Geschwindigkeit V(y), d.h. vom Eintrittsprofil. Bevorzugt ist die Eintrittshöhe in den ersten Teilluftkanal 11 kleiner gleich der Höhe der Verblockung, d.h. es gilt bevorzugt:
A3 <= A2.

Ferner sind folgende Verhältnisse für den dargestellten Schalldämpfer geeignet:

E1 / A3 = 0,70 bis 0,95
E1 / D1 = 0,65 bis 0,95 und
E2 / D2 = 0,65 bis 0,95

Allgemein sind die folgenden Verhältnisse sinnvoll:

E1 / A3 = 0,30 bis 0,95
E1 / D1 = 0,40 bis 0,95 und
E2 / D2 = 0,40 bis 0,95

Um die Luftverteilung bis zum Kanalaustritt zu Vergleichmäßigen, wird beim vorliegenden Eintrittsströmungsprofil die Strömung im Teilluftkanal 11 etwas stärker gedrosselt als im Teilkanal 12, indem E1 kleiner ausgeführt wird als E2. Somit ist das Verhältnis E1/E2, in erster Linie, abhängig von V(y). Durch eine Abmessungswahl entsprechend den vorstehenden Angaben, ergibt sich vorliegend ein sehr gutes Strömungsprofil verbunden mit einer geringen Schalldurchlässigkeit in Strömungsrichtung der Luft.

In sämtlichen zuvor beschriebenen Beispielen kann der Fluid- oder Luftkanal 1 als Einsatz ausgebildet sein, welcher an Stelle eines herkömmlichen Bereichs in das Fluidkanalsystem, beispielsweise einer Fahrzeug-Klimaanlage, eingesetzt werden kann. Die Anbringung derartiger Fluid- oder Luftkanäle in einem Luftkanalsystem erfolgt vorzugsweise mit einer geeigneten, formschlüssigen Befestigung zwischen den Bauteilen, wobei akustisch wirksame Materialien vorgesehen sind, die eine störungsfreie Überströmung der Fügestellen ermöglichen.

Obwohl vorstehend nicht ausdrückliche anhand eines Ausführungsbeispiels beschrieben, kann an Stelle von Luft auch ein anderes Fluid durch den Fluidkanal strömen, wie beispielsweise Wasser oder Öl. Die gesamte Anordnungen gemäß den vorstehend beschriebenen Ausführungsbeispielen dienen vorliegend als Schalldämpfer, um eine Schallausbreitung, bspw. von Klappengeräuschen, aus dem Bereich der Klimaanlage in den Fahrzeuginnenraum zu verhindern, jedoch sind auch andere Verwendungen möglich.

**Patentansprüche**

1.   Fluidkanal, mit einer Wand (2), wobei der Fluidkanal (1) einen gekrümmten Verlauf aufweist, so dass nur zwischen einem Teilbereich der Eingangsöffnung und einem kleinen Teilbereich der Ausgangsöffnung eine lineare Verbindung möglich ist, wobei im Fluidkanal (1) mindestens ein Strömungsleitelement (5, 6) vorgesehen ist, welches den Fluidkanal in zwei Teilfluidkanäle (11, 12) unterteilt und zumindest mit einem Teilbereich in dem Bereich des Fluidkanals (1) angeordnet ist, in welchem eine lineare Verbindung zwischen der Eingangsöffnung und der Ausgangsöffnung möglich ist, und der Fluidkanal (1) eine Verblockung in Wellenform aufweist **dadurch gekennzeichnet, dass** das Strömungsleitelement (5, 6) einen profilierten Querschnitt mit mindestens einer gekrümmt in Strömungsrichtung verlaufenden Fläche aufweist und das Strömungsleitelement (5) den Fluidkanal (1) in zwei Teilfluidkanäle (11, 12) aufteilt, wobei die Geometrie der Teilfluidkanäle (11 und 12) in Abhängigkeit des engsten Querschnitts (E1) des ersten Teilfluidkanals (11) und des engsten Querschnitts (E2) des zweiten Teilfluidkanals (12) bestimmt ist und der engste Querschnitt (E1) des ersten Teilfluidkanals (11), der benachbart der Verblockung verläuft, kleiner ausgeführt ist als der engste Querschnitt (E2) des zweiten Teilfluidkanals (12).

2. Fluidkanal nach Anspruch 1, **dadurch gekennzeichnet, dass** die Wand (2) zumindest bereichsweise mit schallabsorbierendem Material (3) umgeben oder aus schallabsorbierendem Material (3) gebildet ist, und/oder zumindest bereichsweise durch ein schalltransparentes Material (13) gebildet ist,

3. Fluidkanal nach Anspruch 1 oder 2, **dadurch gekennzeichnet, dass** das Strömungsleitelement (5, 6) durch schallabsorbierendes Material (3) gebildet oder zumindest teilweise von schallabsorbierendem Material (3) umgeben ist.

4. Fluidkanal nach Anspruch 2 oder 3, **dadurch gekennzeichnet, dass** in zumindest einem Bereich, welcher durch schallabsorbierendes Material (3) gebildet ist, eine Dämmwand (4, 7) angeordnet ist.

5. Fluidkanal nach Anspruch 4, **dadurch gekennzeichnet, dass** die Dämmwand (7) im Strömungsleitelement (5) ausgebildet ist.

6. Fluidkanal nach Anspruch 4 oder 5, **dadurch gekennzeichnet, dass** die Dämmwand (7) zumindest bereichsweise als tragende Struktur für das schallabsorbierende Material (3) dient.

7. Fluidkanal nach einem der vorhergehenden Ansprüche, **dadurch gekennzeichnet, dass** zumindest einer der Teilfluidkanäle (11, 12) einen als Düse ausgebildeten Eintrittsbereich und einen als Diffusor ausgebildeten Austrittsbereich aufweist.

8. Fluidkanal nach einem der vorhergehenden Ansprüche, **dadurch gekennzeichnet, dass** der Querschnitt stromlinienförmig profiliert ist.

9. Fluidkanal nach einem der vorhergehenden Ansprüche, **dadurch gekennzeichnet, dass** der Eintrittsquerschnitt vor der Verblockung und der Austrittsquerschnitt nach der Verblockung miteinander fluchtend angeordnet sind.

10. Fluidkanal nach Anspruch 9, **dadurch gekennzeichnet, dass** die Tiefe der Verblockung (A2) im Verhältnis zur Länge der Verblockung (L) im Bereich von 0,15 bis 0,35 liegt.

11. Fluidkanal nach einem der vorhergehenden Ansprüche, **dadurch gekennzeichnet, dass** der engste Querschnitt (E1) des ersten Teilfluidkanals (11), der benachbart der Verblockung verläuft, im Verhältnis zur Eintrittsht5he (A3) des Teilfluidkanals (11) im Bereich von 0,30 bis 0,95 liegt.

12. Fluidkanal nach einem der vorhergehenden Ansprüche, **dadurch gekennzeichnet, dass** das Verhältnis des engsten Querschnitts (E1) des ersten Teilfluidkanals (11) zum Austritt aus dem ersten Teilfluidkanal (11) im Bereich 0,65 bis 0,95 liegt.

13. Fluidkanal nach einem der vorhergehenden Ansprüche, **dadurch gekennzeichnet, dass** das Verhältnis des engsten Querschnitts (E2) des zweiten Teilfluidkanals (12) zum Austritt aus dem zweiten Teilfluidkanal (12) im Bereich 0,65 bis 0,95 liegt.

**Claims**

1. A fluid conduit having a wall (2), therein the fluid conduit (1) has a curved shape, so that a linear connection is possible only between a section of the inlet opening and a small section of the outlet opening, wherein at least one flow guide element (5, 6) is provided in the fluid conduit (1), which element subdivide the fluid conduit into two fluid conduit sections (11, 12) and is arranged with at least one section in the region of the fluid conduit (1) in which a linear connection between the inlet opening and the outlet opening is possible, and the fluid conduit (1) has an obstruction in the form of a wave, **characterized in that** the flow guide element (5, 6) has a profiled cross-section having at least one curved surface extending in the direction of flow, and the flow guide element (5) divides the fluid conduit (1) into two fluid conduit sections (11, 12), whereon the geometry of the fluid conduit section (11 and 12) is determine on the basis of the narrowest cross-section (E1) of the first fluid conduits section (11) and the narrowest cross-section (E2) of the second fluid conduit section (12), and the narrowest cross-section (E1) of the first fluid conduit section (11), which extends adjacent to the obstruction, is embodied as smaller than the narrowest cross-section (E2) of the second fluid conduit section (12).

2. The fluid conduit according to claim 1, **characterized in that** at least portions of the wall (2) are encompassed by sound absorbing material (3) or are made of sound absorbing material (3), and/or at least portions of the wall are made of a sound transparent material (13).

3. The fluid conduit according to claim 1 or 2, **characterized in that** the flow guide element (5, 6) is made of sound absorbing material (3) or is at least partially encompassed by sound absorbing material (3).

4. The fluid conduit according to claim 2 or 3, **characterized in that** an insulating wall (4, 7) is arranged in at least one portion that is made of sound absorbing material (3).

5. The fluid conduit according to claim 4, **characterized in that** the insulating wall (7) is formed in the flow guide element (5).

6. The fluid conduit according to claim 4 or 5, **characterized in that** at least portions of the insulating wall (7) serve as a support structure for the sound absorbing material (3).

7. The fluid conduit according to any one of the preceding claims, **characterized in that** at least one of the fluid conduits sections (11, 12) has an inlet region embodied as a nozzle and an outlet region embodied as a diffusor.

8. The fluid conduit according to any one of the preceding claims, **characterized in that** the cross-section thereof is streamlined if shape.

9. The fluid conduit according to any one of the preceding claims, **characterized in that** the inlet cross-section upstream of the obstruction, and the outlet cross-section downstream of the obstruction are arranged in alignment with one another.

10. The fluid conduit according to claim 9, **characterized in that** the depth of the obstruction (A2) in proportion to the length of the obstruction (L) is within the range from 0.15 to 0.35.

11. The fluid conduit according to any one of the preceding claims, **characterized in that** the narrowest cross-section (E1) of the first fluid conduit section (11), which extends adjoining the obstruction, in proportion to the inlet height (A3) of the fluid conduit section (11) is within the range from 0.30 to 0.95.

12. The fluid conduit according to any one of the preceding claims, **characterized in that** the ratio of the narrowest cross-section (E1) of the first fluid conduit section (11) two the outlet from the first fluid conduit section (11) is within the range from 0.65 two 0.95.

13. The fluid conduit according to any one of the preceding claims, **characterized in that** the ratio of the narrowest cross-section (E2) of the second fluid conduit section (12) to the outlet of the second fluid conduit section (12) is within the range from 0.65 to 0.95.

**Revendications**

1. Conduit de fluide comprenant une paroi (2), où le conduit de fluide (1) présente un profil courbe, de sorte qu'une liaison linéaire est possible seulement entre une zone partielle de l'ouverture d'entrée et une petite zone partielle de l'ouverture de sortie, ou il est prévu, dans le conduit de fluide (1), au moins un élément déflecteur d'écoulement (5, 6) qui subdivise le conduit de fluide en deux conduits de fluide partiels (11, 12) et est disposé dans la zone du conduit de fluid (1) en comportant au moins une zone partielle dans laquelle une liaison linéaire est possible entre l'ouverture d'entrée et l'ouverture de sortie, et le conduit de fluide (1) présente une blocage de forme ondulée,
**caractérisé en ce que** l'élément déflecteur d'écoulement (5, 6) présente une section profilée comportant au moins une surface s'étendant de façon courbe dans la direction d'écoulement, et l'élément déflecteur d'écoulement (5) subdivise le conduit de fluide (1) en deux conduits de fluide partiels (11, 12), où la géométrie des conduits de fluide partiels (11 et 12) est déterminée en fonction de la plus étroite section (E1) du premier conduit de fluide partiel (11) et de la plus étroite section (E2) du deuxième conduit de fluide partiel (12), et la plus étroite section (E1) du premier conduit de fluide partiel (11), qui s'étend à proximité du blocage, est réalisée en étant plus petite que la plus étroite section (E2) du deuxième conduit de fluide partiel (12).

2. Conduit de fluide selon la revendication 1, **caractérisé en ce que** la paroi (2) est entourée au moins partiellement par un matériau (3) insonorisant ou formée par un matériau (3) insonorisant, et / ou est formée au moins partiellement par un matériau (13) laissant passer les bruits.

3. Conduit de fluide selon la revendication 1 ou 2, **caractérisé en ce que** l'élément déflecteur d'écoulement (5, 6) est formé par un matériau (3) insonorisant ou entouré au moins partiellement par un matériau (3) insonorisant.

4. Conduit de fluide selon la revendication 2 ou 3, **caractérisé en ce qu'**une paroi isolante (4, 7) est disposée dans au moins une zone qui est formée par un matériau (3) insonorisant.

5. Conduit de fluide selon la revendication 4, **caractérisé en ce que** la paroi isolante (7) est configurée dans l'élément déflecteur d'écoulement (5).

6. Conduit de fluide selon la revendication 4 ou 5, **caractérisé en ce que** la paroi isolante (7) sert au moins partiellement de structure porteuse pour le matériau (3) insonorisant.

**7.** Conduit de fluide selon l'une quelconque des revendication précédentes, **caractérisé en ce qu'**au moins l'un des conduits de fluide partiels (11, 12) présente une zone d'entrée configurée comme une buse et une zone de sortie configurée comme un diffuseur.

**8.** Conduit de fluide selon l'une quelconque des revendications précédentes, **caractérisé en ce que** la section est profilée de façon aérodynamique.

**9.** Conduit de fluide selon l'une quelconque des revendications précédentes, **caractérisé en ce que** la section d'entrée, en amont du blocage, et la section de sortie, en aval du blocage, sont disposées en étant alignées l'une par rapport à l'autre.

**10.** Conduit de fluide selon la revendication 9, **caractérisé en ce que** la profondeur du blocage (A2), par rapport à la longueur du blocage (L), est dans la plage comprise entre 0,15 et 0,35.

**11.** Conduit de fluide selon l'une quelconque des revendications précédentes, **caractérisé en ce que** la plus étroite section (E1) du premier conduit de fluide partiel (11), qui s'étend à proximité du blocage, est, par rapport à la hauteur d'entrée (A3) du conduit de fluide partiel (11), dans la plage comprise entre 0,30 et 0,95.

**12.** Conduit de fluide selon l'une quelconque des revendications précédentes, **caractérisé en ce que** le rapport de la plus étroite section (E1) du premier conduit de fluide partiel (11), relativement à la sortie du premier conduit de fluide partiel (11), est dans la plage comprise entre 0,65 et 0,95.

**13.** Conduit de fluide selon l'une quelconque des revendication précédentes, **caractérisé en ce que** le rapport de la plus étroite section (E2) du deuxième conduit de fluide partiel (12), relativement à la sortie du deuxième conduit de fluide partiel (12), est dans la plage comprise entre 0,65 et 0,95.

Fig. 1

EP 1 997 656 B1

Fig. 2

Fig. 3

V(y)

2

11

A3

Düse 1

A2

Diffusor 1

A1

5

Düse 2

Diffusor 2

y
x

1

12

EP 1 997 656 B1

Fig. 4

EP 1 997 656 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3639138 C2

- DE 19722866 A1